# EUROPÄISCHE PATENTSCHRIFT

(11) **EP 2 312 673 B1**
(45) Veröffentlichungstag und Bekanntmachung des Hinweises auf die Patenterteilung: **19.06.2013**
(21) Anmeldenummer: 09012841.4
(22) Anmeldetag: 10.10.2009
(51) Int. Cl.: H01M 2/16, H01M 4/76, H01M 10/16

(54) **Akkumulator**
Accumulator
Accumulateur

(43) Veröffentlichungstag der Anmeldung: 20.04.2011
(73) Patentinhaber: HOPPECKE Batterien GmbH & Co. KG, 59929 Brilon (DE)
(72) Erfinder: Kesper Heinrich, 34508 Willingen (DE)
(74) Vertreter: Stenger, Watzke & Ring

(56) Entgegenhaltungen:
- DE-A1- 2 337 320
- DE-A1- 19 509 718
- US-A- 5 695 891
- BOHNSTEDT W: "A review of future directions in automotive battery separators" JOURNAL OF POWER SOURCES, ELSEVIER SA, CH, Bd. 133, Nr. 1, 28. Mai 2004 (2004-05-28), Seiten 59-66, XP004507126 ISSN: 0378-7753

## Beschreibung

Die Erfindung betrifft einen Akkumulator, insbesondere einen Bleiakkumulator, mit einer ersten Elektrode und einer zweiten Elektrode, wobei zwischen der ersten Elektrode und der zweiten Elektrode ein Separator angeordnet ist.

Akkumulatoren als solche sind aus dem Stand der Technik gut bekannt, weshalb es eines gesonderten druckschriftlichen Nachweises an dieser Stelle nicht bedarf.

Ein aus dem Stand der Technik vorbekannter Akkumulator verfügt in aller Regel über eine Mehrzahl von elektrochemischen Zellen. Eine solche Zelle stellt einen Elektrolyten, beispielsweise in Form von Schwefelsäure bereit. Innerhalb einer Zelle sind wenigstens zwei Elektroden angeordnet, die bevorzugterweise plattenförmig ausgebildet sind. Bei der einen Elektrode handelt es sich um die Minus-Elektrode und die andere Elektrode stellt die Plus-Elektrode dar. Im endmontierten Zustand werden die Elektroden vom Elektrolyten umspült. DE 2337320 offenbart eine Umhüllung für Röhrchenelektroden für Bleiakkumulatoren. US 5695891 offenbart einen Bleiakkumulator mit Plattenelektroden und mikropörem Separator. DE 19509718 offenbart einen Bleiakkumulator mit Röhrchenelektroden mit Abschluss-Fussleiste. Der Artikel "A review of future directions in automotivebattry separators, Journal of Power Sources 133 (2004), Seite 59-66, offenbart einen taschenförmigen Polyethylenseparator.

Zwecks Vermeidung eines elektrischen Kurzschlusses ist zwischen zwei benachbarten Elektroden ein Separator angeordnet. Darüber hinaus kann zur Definition eines bestimmten Abstandes zwischen zwei benachbarten Elektroden zwischen diesen auch ein Abstandshalter angeordnet sein. Eine solche Konstruktion findet sich insbesondere bei Industriebatterien.

Zwecks Produktionsvereinfachung ist es aus dem Stand der Technik bekannt, den zwischen zwei benachbarten Elektroden angeordneten Separator und den zwischen zwei benachbarten Elektroden angeordneten Abstandshalter einstückig auszugestalten. Eine solche einstückige Ausgestaltung ist beispielsweise durch sogenannte gerippte Separatorblätter gegeben.

Bei einem gerippten Separatorblatt handelt es sich um ein Separatorblatt, das einseitig darauf aufgebrachte Rippen vorzugsweise in Form von in Längsrichtung verlaufenden Stegen aufweist. Diese einstückig mit dem Separatorblatt ausgebildeten Rippen dienen der Abstandshaltung.

Separatoren werden vorzugsweise durch Kalandrieren hergestellt. Als Separatormaterial kommt insbesondere Polyethylen in Betracht.

Obgleich sich Akkumulatoren der vorgenannten Art im alltäglichen Praxiseinsatz bewährt haben, besteht Verbesserungsbedarf, insbesondere mit Blick auf eine vereinfachte Herstellung. Es ist deshalb die **Aufgabe** der Erfindung, einen Akkumulator der eingangs genannten Art dahingehend weiterzuentwickeln, dass eine vereinfachte Herstellung möglich ist.

Zur **Lösung** dieser Aufgabe wird mit der Erfindung ein Akkumulator der eingangs genannten Art vorgeschlagen, der sich dadurch auszeichnet, dass der Separator ein rippenfreies Separatorblatt ist und dass die eine der beiden Elektroden in einem als Elektrodenabstandshalter dienenden Netzschlauch angeordnet ist.

Anders als bei aus dem Stand der Technik vorbekannten Akkumulatoren wird mit der Erfindung ein Akkumulator gemäß dem unabhängigen Anspruch 1 vorgeschlagen, der eine nicht einstückige Ausgestaltung von Separator und Abstandshalter vorsieht. Es wird vielmehr vorgeschlagen, zwischen zwei benachbarten Elektroden ein rippenfreies Separatorblatt anzuordnen. Zwecks Abstandshaltung kommt ein Netzschlauch zum Einsatz, der die eine der beiden Elektroden aufnimmt. Im endmontierten Zustand sind zwischen zwei benachbarten Elektroden also ein rippenfreies Separatorblatt und der zwischen diesen beiden Elektroden angeordnete Teil des Netzschlauches vorgesehen.

Die erfindungsgemäße Ausgestaltung ist insbesondere aus produktionstechnischen Gründen von Vorteil. Die Herstellung von mit Rippen versehenen Separatorblättern ist vergleichsweise aufwendig. Dies ist dadurch begründet, dass die der späteren Abstandshaltung dienenden Rippen den Herstellungsprozess verlängern.

Die gerippt ausgebildeten Separatorblätter ermöglichen auch keine Taschenbildung, wie diese insbesondere bei Starterbatterien zum Einsatz kommen. Die Taschenbildung unter Verwendung von gerippt ausgebildeten Separatorblättern würde im Abkantungsbereich zu einem Brechen der Rippen führen.

Zur Abstandshaltung zwischen zwei Elektroden sind aus dem Stand der Technik auch kassettenartige Gitter bekannt, die der jeweiligen Aufnahme einer Elektrode dienen, doch auch derartige Kassetten erlauben keine vollautomatisierte Produktionsweise. Die Bestückung von Gitterkassetten muss vielmehr manuell erfolgen.

Nach der erfindungsgemäßen Ausgestaltung dient als Abstandshalter ein Netzschlauch. Die Besonderheit des Netzschlauches liegt in der Möglichkeit, einen vollautomatisierten und in der Geschwindigkeit deutlich gesteigerten Herstellprozess durchzuführen. Der Netzschlauch wird quasi endlos hergestellt. Es erfolgt eine Ablängung und in die abgelängten Teilabschnitte des Netzschlauches werden die Elektrodenplatten jeweils eingeführt. Gemäß einer alternativen Ausführungsform kann auch vorgesehen sein, den Netzschlauch endlos herzustellen, mit Elektrodenplatten zu bestücken und alsdann entlang einer zwischen zwei Elektrodenplatten befindlichen Schnittkante aufzutrennen. Welche Verfahrensvariante auch zum Einsatz kommen mag, von entscheidendem Vorteil gegenüber dem Stand der Technik ist, dass in hoher Herstellgeschwindigkeit Elektrodenplatten mit beidseits angeordneten Abstandshaltern dadurch hergestellt werden können, dass eine Elektrodenplatte innerhalb eines Netzschlauches angeordnet wird.

Da der Netzschlauch nach der erfindungsgemäßen Ausgestaltung die Abstandsfunktion zwischen zwei benachbarten Elektroden übernimmt, bedarf es keines gerippten Separatorblattes mehr. Die Erfindung schlägt deshalb in Kombination mit dem Netzschlauch vor, zwischen zwei benachbarten Elektroden ein rippenfreies Separatorblatt anzuordnen.

Die erfindungsgemäße Ausgestaltung ist nicht nur aus produktionstechnischer Sicht von Vorteil. Im Vergleich zu vorbekannten Lösungen zeichnet sich die erfindungsgemäße Lösung ferner dadurch aus, dass zwischen zwei benachbarten Elektrodenplatten sehr viel weniger Material zwecks Separation und Abstandshaltung verbaut ist. Im Vergleich zum Stand der Technik nimmt also die Fremdmaterialmenge zwischen zwei benachbarten Elektroden ab. In vorteilhafter Weise kann deshalb die elektrochemische Zelle bzw. der Akkumulator mehr Elektrolyt aufnehmen, was die Kapazität der elektrochemischen Zelle bzw. des Akkumulators erhöht.

Der Netzschlauch ist aus Polyethylen-Fäden gebildet, die kreuzweise verlegt und in den Kreuzungspunkten miteinander verschweißt sind. Dabei wird im endmontierten Zustand der Abstand zwischen zwei benachbarten Elektroden durch die Dicke der Kreuzungspunkte des Netzschlauches in Dickenrichtung bestimmt. Die Dicke eines Kreuzungspunktes beträgt maximal den zweifachen Durchmesser des Netzschlauch-Fadens. Bei der Herstellung des Netzschlauches können die Netzschlauch-Fäden in den Kreuzungspunkten miteinander verpresst werden, wodurch zielgerichtet Einfluss auf die Kreuzungspunktdicke genommen werden kann. Auf diese Weise kann der spätere Abstand zwischen zwei benachbarten Elektroden gezielt eingestellt werden. Kommt als Fadenmaterial beispielsweise ein Faden zum Einsatz, der einen Durchmesser von 1 mm aufweist, so ergibt sich im Kreuzungspunkt zweier Fäden eine Dicke von 2 mm. Diese Dicke kann durch entsprechende Krafteinwirkung im Zuge der Herstellung zielgerecht auf ein Maß von zum Beispiel 1,8 mm oder 1,6 mm eingestellt werden.

Gemäß einem weiteren Merkmal der Erfindung ist vorgesehen, dass das zwischen zwei Elektroden angeordnete Separatorblatt Teil einer Separatortasche ist, in der die eine der beiden Elektroden angeordnet ist. Dabei ist es denkbar, die Elektroden in Dickenrichtung abwechselnd innerhalb einer Separatortasche und einem Netzschlauch anzuordnen oder jede zweite Elektrode in Dickenrichtung innerhalb eines Netzschlauches anzuordnen, wobei die Elektrode samt Netzschlauch innerhalb einer Separatortasche angeordnet ist. Dabei erfolgt die Anordnung von Netzschlauch und Separator bevorzugterweise derart, dass das Separatormaterial möglichst weit weg von der Plus-Elektrode angeordnet ist, um Oxidationsbeschädigungen vermeiden zu können.

Die Elektrode kann gemäß einem weiteren Merkmal der Erfindung fußseitig eine Fußleiste aufweisen, die aus Polypropylen gebildet ist. Die aus Polypropylen bestehende Fußleiste sowie das aus Polyethylen gebildete Netz können thermisch durch Verschweißen miteinander verbunden werden. Diese Ausgestaltung hat den Vorteil, dass der Netzschlauch verrutschsicher, das heißt lagegenau an der Elektrode angeordnet werden kann.

Mit der Erfindung wird insgesamt eine Konstruktion vorgeschlagen, die einen kontinuierlichen Herstellprozess ermöglicht, was nicht zuletzt aus Kostengründen von Vorteil ist.

Weitere Merkmale und Vorteile der Erfindung ergeben sich aus der nachfolgenden Beschreibung anhand der Fign. Dabei zeigen
- Fig.1: in schematischer Darstellung eine elektrochemische Zelle eines erfindungsgemäßen Akkumulators gemäß einer ersten Ausführungsform;
- Fig. 2: in schematischer Darstellung eine elektrochemische Zelle eines erfindungsgemäßen Akkumulators gemäß einer zweiten Ausführungsform;
- Fig. 3: in schematischer Darstellung eine elektrochemische Zelle eines erfindungsgemäßen Akkumulators gemäß einer dritten Ausführungsform;
- Fig.4: in schematischer Darstellung eine Elektrode des erfindungsgemäßen Akkumulators gemäß Blickrichtung IV-IV nach Fig. 1.

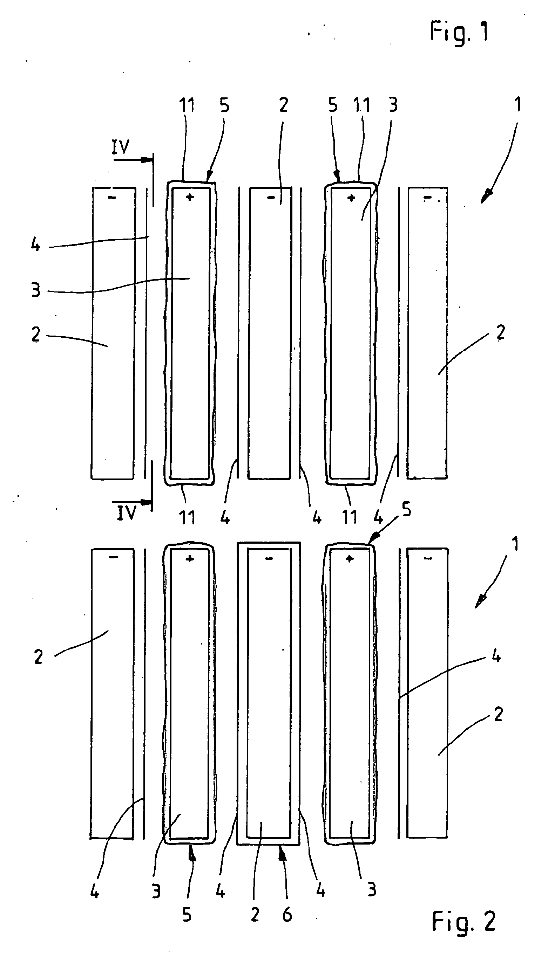

In lediglich schematischer Darstellung zeigt Fig. 1 eine elektrochemische Zelle 1 eines Akkumulators, beispielsweise eines Bleiakkumulators. Die elektrochemische Zelle 1 verfügt über eine Mehrzahl von Elektroden 2 und 3, die jeweils plattenförmig ausgebildet sind. Im gezeigten Ausführungsbeispiel sind insgesamt fünf Elektrodenplatten vorgesehen. Die Elektrodenplatten werden von einem in den Fign. nicht näher dargestellten Elektrolyten umspült.

Wie Fig. 1 erkennen lässt, sind abwechselnd eine erste Elektrode 2 und eine zweite Elektrode 3 vorgesehen, wobei die ersten Elektroden 2 Minus-Elektroden und die zweiten Elektroden 3 Plus-Elektroden sind.

Zwischen zwei benachbarten Elektroden ist jeweils ein rippenfreies Separatorblatt 4 angeordnet. Die zweiten Elektroden 3, das heißt die Plus-Elektroden 3 sind innerhalb eines Netzschlauches 5 angeordnet, der die Elektrode 3 jeweils umgibt. Dabei dient der Netzschlauch 5 als Abstandshalter, und zwar aufgrund seiner Umhüllung sowohl für die linke als auch für die rechte Nachbarelektrode.

Um ungewollte Kurzschlüsse im Kantenbereich der Elektroden zu vermeiden, die beispielsweise dadurch auftreten können, dass Separatorblätter 4 verrutschen, ist gemäß einem besonderen Merkmal der Erfindung vorgesehen, den Netzschlauch 5 im Bereich der in Höhenrichtung verlaufenden Randkanten 11 verstärkt auszubilden, das heißt einen Kantenschutz zu schaffen. Dies kann beispielsweise dadurch erfolgen, dass der Netzschlauch im Bereich eines streifenförmigen Abschnittes als Vollmaterial ausgebildet ist. Diese Abschnitte bilden im endmontierten Zustand die Randkanten 11 aus.

Fig. 2 zeigt eine alternative Ausgestaltung. Im Unterschied zur Ausgestaltung nach Fig. 1 ist gemäß dieser Ausgestaltung vorgesehen, dass die Separatorblätter 4 der mit Bezug auf die Zeichnungsebene mittleren Elektrode Teil einer Separatortasche 6 sind. Die die mittlere Elektrode links- wie rechtsseitig abdeckenden Separatorblätter sind also zu einer gemeinsamen die mittlere Elektrode aufnehmenden Tasche miteinander verbunden. Zur Einsparung von Separatormaterial sind die beiden außenliegenden ersten Elektroden 2 nicht innerhalb einer Separatortasche 6 angeordnet. Eine Separatortasche 6 kann selbstverständlich aber auch für diese Elektroden vorgesehen sein.

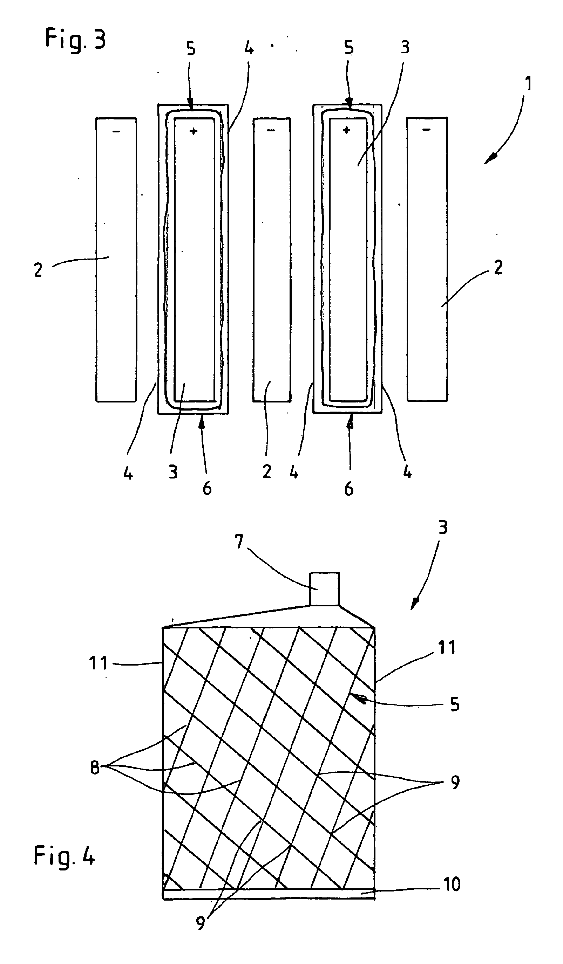

Fig. 3 zeigt eine weitere Ausführungsform. Gemäß dieser Ausführungsform sind die zweiten Elektroden 3, das heißt die Plus-Elektroden in Entsprechung der beiden vorerläuterten Beispiele innerhalb eines Netzschlauches 5 angeordnet. Die so bestückten Elektroden 3 sind gemäß dem Ausführungsbeispiel nach Fig. 3 jeweils innerhalb einer Separatortasche 6 angeordnet. Gemäß dieser Konstruktion kommen also erste Elektroden 2 zum Einsatz, die als solche verbaut werden. Die Plus-Elektroden 3 sind hingegen sowohl innerhalb eines Netzschlauches als auch innerhalb einer Separatortasche angeordnet. Bei einer Bestückung einer elektrochemischen Zelle1 ergibt sich dann der schon vorerläuterte Aufbau, wonach zwischen zwei benachbarten Elektroden jeweils ein Abstandshalter als auch ein Separator angeordnet sind.

Fig. 4 lässt in schematischer Darstellung eine zweite Elektrode 3 nach Fig. 1 erkennen, die innerhalb eines Netzschlauches 5 angeordnet ist. Wie die Darstellung erkennen lässt, besteht der Netzschlauch 5 aus einzelnen Fäden 8, die kreuzweise verlegt und in den Kreuzungspunkten 9 miteinander verbunden, vorzugsweise verschweißt sind. Die Elektrode 3 verfügt darüber hinaus über eine Fußleiste 10, die aus Polypropylen gebildet ist. Die Fäden 8 des Netzschlauches 5 bestehen aus Polyethylen. Die Fußleiste 10 und der Netzschlauch 5 können miteinander verschweißt sein. Darüber hinaus ist es auch möglich, die Separatorblätter und die Netzschläuche 5 miteinander zu verschweißen, was sich insbesondere bei einer Ausgestaltung gemäß Fig. 3 anbietet.

Fig. 4 lässt noch eine Anschlussfahne 7 erkennen, die der elektrischen Verbindung mit anderen Elektroden in an sich bekannter Weise dient.

Der erfindungsgemäße Akkumulator verfügt über einen Aufbau, der in vorteilhafter Weise eine vereinfachte Herstellung ermöglicht. Es ist insbesondere eine vollautomatisierte kontinuierliche Herstellung möglich, die nicht zuletzt aus Kostengründen von Vorteil ist. Dabei wird die kontinuierliche Herstellung insbesondere dadurch möglich, dass ein als Abstandshalter dienender Netzschlauch zum Einsatz kommt, der mit großer Geschwindigkeit kontinuierlich hergestellt werden kann und in den die Elektroden in einfacher Weise eingebracht werden können. Zudem ist es möglich, die Elektroden mit dem zugehörigen Netzschlauch zu verschweißen, womit eine Lagesicherung des Netzschlauches gegenüber der Elektrode erreicht ist.

### Bezugszeichenliste

- 1: elektrochemische Zelle
- 2: erste Elektrode (Minus)
- 3: zweite Elektrode (Plus)
- 4: Separatorblatt
- 5: Netzschlauch
- 6: Separatortasche
- 7: Anschlussfahne
- 8: Faden
- 9: Kreuzungspunkt
- 10: Fußleiste
- 11: Randkante

## Patentansprüche

1. Akkumulator mit einer ersten Elektrode (2) und einer zweiten Elektrode (3), wobei zwischen der ersten Elektrode (2) und der zweiten Elektrode (3) ein Separator angeordnet ist, wobei der Separator ein rippenfreies Separatorblatt (4) ist und wobei die eine der beiden Elektroden (2, 3) in einem als Elektrodenabstandshalter dienenden Netzschlauch (5) angeordnet ist,
**dadurch gekennzeichnet, dass**
die Elektroden (2, 3) plattenförmig ausgebildet sind und dass der Netzschlauch (5) und der Separator aus Polyethylen bestehen, wobei der Netzschlauch (5) aus kreuzweise verlegten Fäden gebildet ist, wobei der Abstand zwischen zwei benachbarten Elektroden (2, 3) durch die Dicke von Kreuzungspunkten (9) des Netzschlauches (5) bestimmt ist und wobei die Kreuzungspunkte (9) aus miteinander verschweißten Fäden (8) gebildet sind.

2. Akkumulator nach Anspruch 1, **dadurch gekennzeichnet, dass** der Netzschlauch (5) verstärkt ausgebildete Randkanten (11) aufweist.

3. Akkumulator nach Anspruch 1 oder 2, **dadurch gekennzeichnet, dass** das Separatorblatt Teil einer Separatortasche (6) ist, in der die eine der beiden Elektroden (2, 3) angeordnet ist.

4. Akkumulator nach einem der vorhergehenden Ansprüche, **dadurch gekennzeichnet, dass** der Separator und der Netzschlauch (5) miteinander verschweißt sind.

5. Akkumulator nach einem der vorhergehenden Ansprüche, **dadurch gekennzeichnet, dass** die Elektrode (3) fußseitig eine Fußleiste (10) aus Polypropylen trägt.

6. Akkumulator nach einem der vorhergehenden Ansprüche, **dadurch gekennzeichnet, dass** der Netzschlauch (5) mit der Fußleiste (10) einer Elektrode (3) verschweißt ist.

## Claims

1. An accumulator comprising a first electrode (2) and a second electrode (3), wherein a separator is located between the first electrode (2) and the second electrode (3), wherein the separator is a separator sheet (4) without ribs and wherein one of the two electrodes (2, 3) is placed in a netting tube (5) serving as electrode spacer,
**characterized in that**
the electrodes (2, 3) are plate-shaped and that the netting tube (5) and the separator are made of polyethylene, wherein the netting tube (5) is formed by crosswise laid threads, wherein the distance between two adjoining electrodes (2, 3) is determined by the thickness of crossing points (9) of the netting tube (5) and wherein the crossing points (9) are formed by threads (8) welded to each other.

2. An accumulator according to claim 1, **characterized in that** the netting tube (5) comprises reinforced border edges (11).

3. An accumulator according to claim 1 or 2, **characterized in that** the separator sheet is part of a separator bag (6) in which the one of the two electrodes (2, 3) is located.

4. An accumulator according to one of the preceding claims, **characterized in that** the separator and the netting tube (5) are welded to each other.

5. An accumulator according to one of the preceding claims, **characterized in that** the electrode (3) carries a foot rail (10) made of polypropylene on the side of its foot.

6. An accumulator according to one of the preceding claims, **characterized in that** the netting tube (5) is welded to the foot rail (10) of an electrode (3).

## Revendications

1. Accumulateur comprenant une première électrode (2) et une deuxième électrode (3), un séparateur étant disposé entre la première électrode (2) et la deuxième électrode (3), le séparateur étant une feuille de séparateur sans nervures (4) et l'une des deux électrodes (2, 3) étant disposée dans un filet tubulaire (5) servant d'écarteur d'électrodes,
**caractérisé en ce que**
les électrodes (2, 3) ont la forme de plaques et que le filet tubulaire (5) et le séparateur consistent en polyéthylène, étant donné que le filet tubulaire (5) est formé par des fils mis en croisé, la distance entre deux électrodes voisines (2, 3) étant déterminée par l'épaisseur des points de croisement (9) du filet tubulaire (5) et les points de croisement (9) étant formés par des fils (8) soudés les uns aux autres.

2. Accumulateur selon la revendication 1, **caractérisé en ce que** le filet tubulaire (5) comprend des bords marginaux renforcés (11).

3. Accumulateur selon la revendication 1 ou la revendication 2, **caractérisé en ce que** la feuille de séparateur fait partie d'un sac de séparateur (6) dans lequel l'une des deux électrodes (2, 3) est disposée.

4. Accumulateur selon l'une des revendications précédentes, **caractérisé en ce que** le séparateur et le filet tubulaire (5) sont soudés l'un à l'autre.

5. Accumulateur selon l'une des revendications précédentes, **caractérisé en ce que** l'électrode (3) porte un rebord de base (10) en polypropylène du côté de son pied.

6. Accumulateur selon l'une des revendications précédentes, **caractérisé en ce que** le filet tubulaire (5) est soudé au rebord de base (10) d'une électrode (3).
